# FASCICULE DE BREVET EUROPEEN

(11) **EP 1 805 507 B1**
(45) Date de publication et mention de la délivrance du brevet: **21.03.2018**
(21) Numéro de dépôt: 05815948.4
(22) Date de dépôt: 24.10.2005
(51) Int. Cl.: G01N 23/20, G01N 19/04

(54) **PROCEDE ET DISPOSITIF DE MESURE DE L'ENERGIE D'ADHESION**
VERFAHREN UND VORRICHTUNG ZUR MESSUNG VON ADHÄSIONSKRAFT
METHOD AND DEVICE FOR MEASURING ADHESION ENERGY

(30) Priorité: 26.10.2004 FR 0452442
(43) Date de publication de la demande: 11.07.2007
(73) Titulaire: Commissariat à l'Énergie Atomique et aux Énergies Alternatives, 75015 Paris (FR)
(72) Inventeur: RIEUTORD, François, F-38120 SAINT EGREVE (FR); MORICEAU, Hubert, F-38120 SAINT EGREVE (FR); BATAILLOU, Benoît, B-9000 GENT (BE)
(74) Mandataire: Ahner, Philippe
(86) Numéro de dépôt international: PCT/FR2005/050891
(87) Numéro de publication internationale: WO 2006/045979

(56) Documents cités:
- US-A- 5 007 071
- SCHNELL RALF ET AL: "Direct correlation between interfacial width and adhesion in glassy polymers" MACROMOLECULES; MACROMOLECULES APR 7 1998 ACS, WASHINGTON, DC, USA, vol. 31, no. 7, 7 avril 1998 (1998-04-07), pages 2284-2292, XP002331093
- PELLEGRINI N N ET AL: "Random copolymer/homopolymer interfacial widths as a function of copolymer composition" POLYMER, ELSEVIER SCIENCE PUBLISHERS B.V, GB, vol. 41, no. 7, mars 2000 (2000-03), pages 2701-2704, XP004244271 ISSN: 0032-3861
- MORICEAU H ET AL: "Interest of a short plasma treatment to achieve SI-SIO2-SI bonded structures" ELECTROCHEM. SOC. PROC.; ELECTROCHEMICAL SOCIETY PROCEEDINGS; SEMICONDUCTOR WAFER BONDING VII: SCIENCE, TECHNOLOGY, AND APPLICATIONS PROCEEDINGS OF THE INTERNATIONAL SYMPOSIUM 2003, vol. 19, 2003, pages 110-117, XP009048675
- RIEUTORD F ET AL: "HIGH-ENERGY X-RAY REFLECTIVITY OF BURIED INTERFACES CREATED BY WAFER BONDING" PHYSICAL REVIEW, B. CONDENSED MATTER, AMERICAN INSTITUTE OF PHYSICS. NEW YORK, US, vol. 63, no. 12, 15 mars 2001 (2001-03-15), pages 125408-1-125408-5, XP001147457 ISSN: 0163-1829
- TOMASELLA E ET AL: "Structural and mechanical properties of a-C:H thin films grown by RF-PECVD" DIAMOND AND RELATED MATERIALS, ELSEVIER SCIENCE PUBLISHERS, AMSTERDAM, NL, vol. 13, no. 9, septembre 2004 (2004-09), pages 1618-1624, XP004518692 ISSN: 0925-9635
- KIM J ET AL: "Grazing incidence X-ray diffraction studies on the structures of polyurethane films and their effects on adhesion to Al substrates" POLYMER, ELSEVIER SCIENCE PUBLISHERS B.V, GB, vol. 44, no. 21, octobre 2003 (2003-10), pages 6663-6674, XP004456167 ISSN: 0032-3861
- WEICHEL S ET AL: "Fusion bonding of Si wafers investigated by x ray diffraction" APPLIED PHYSICS LETTERS, AMERICAN INSTITUTE OF PHYSICS. NEW YORK, US, vol. 76, no. 1, 3 janvier 2000 (2000-01-03), pages 70-72, XP012024746 ISSN: 0003-6951
- MOSHE DEUTSCH, BENJAMIN M. OCKO: "X-RAY AND NEUTRON REFLECTIVITY" ENCYCLOPEDIA OF APPLIED PHYSICS, vol. 23, 1998, pages 479-490, XP002331094 WEINHEIM ISBN: 3-527-29476-7
- POULSEN M ET AL: "Towards a microscopic understanding of plasma activated bonding" ELECTROCHEM. SOC. PROC.; ELECTROCHEMICAL SOCIETY PROCEEDINGS; SEMICONDUCTOR WAFER BONDING VII: SCIENCE, TECHNOLOGY, AND APPLICATIONS PROCEEDINGS OF THE INTERNATIONAL SYMPOSIUM 2003, vol. 19, 2003, pages 248-258, XP009048642
- FRANCOIS RIEUTORD ET AL: "Rough Surface Adhesion Mechanisms for Wafer Bonding", ECS TRANSACTIONS, vol. 3, 1 January 2006 (2006-01-01), pages 205-215, XP055304616, DOI: 10.1149/1.2357071

## Description

### DOMAINE TECHNIQUE ET ART ANTÉRIEUR

L'invention se rapporte à l'adhérence entre deux surfaces. L'invention concerne plus particulièrement un procédé et un dispositif permettant de mesurer l'énergie d'adhésion à l'interface, et à son application aux couches assemblées par collage moléculaire.

La mesure de l'adhérence d'une couche mince sur un substrat est un problème qui intervient dans un grand nombre de procédés technologiques, et notamment en microélectronique. En général, l'estimation de cette adhérence s'accompagne de la destruction de l'échantillon : les méthodes mises en oeuvre pour mesurer l'énergie d'adhésion sont généralement basées sur des expériences de résistance mécanique à l'arrachement.

En particulier, l'adhérence est un critère important pour le collage moléculaire, technique générique qui permet d'assembler des matériaux différents sans apport de matière adhésive extérieure. Cette technique présente de nombreuses applications, par exemple la fabrication de substrats silicium sur isolant (SOI : « Silicon On Insulator ») dans lesquels sont assemblées deux plaquettes de silicium, l'une au moins étant oxydée en surface, c'est-à-dire recouverte d'une couche d'oxyde isolant. L'une des plaquettes peut ensuite être amincie, par exemple par fracture après implantation, attaque mécano chimique, etc. La plaque SOI ainsi obtenue est donc composée d'une couche collée sur un support mécanique.

Les plaques SOI sont généralement amenées à subir différents traitements successifs, par exemple des recuits, des dépôts, des efforts mécanique ; dans certains cas, la couche est décollée du support pour transfert sur un autre substrat de réalisation d'empilements plus complexes. Il est donc important, pour l'élaboration et l'utilisation de ces produits, de pouvoir contrôler et quantifier l'énergie d'adhésion à différents stades du procédé.

La méthode principale utilisée pour mesurer l'énergie d'adhésion dans le cas du collage moléculaire à l'heure actuelle est la méthode dite « de la lame » : un dispositif d'espacement calibré est introduit entre deux plaques adhérant l'une à l'autre, et le décollement induit est mesuré ; ce décollement est d'autant plus grand que l'énergie d'adhésion est faible (Maszara WP et coll. : « Bonding of silicon wafers for silicon-on-insulators » ; J Appl Phys 1988 ; 64 ; 4943-4950). Cette méthode ne s'applique cependant que sur des plaques rigides et ne convient donc pas pour évaluer l'énergie d'une couche amincie sur un substrat. De plus, l'introduction du dispositif d'espacement est considérée comme destructive puisqu'une action mécanique importante est appliquée sur la surface de l'assemblage SOI qui doit être partiellement décollé.

Le document de R. Schnell et al., intitulé « Direct corrélation between Interfacial Width and adhésion in Glassy Polymers », paru dans Macromolecules 1998 ; 31 : 2284-2292, traite de l'adhésion entre deux couches de polymères. Divers tests ont été effectués afin de vérifier l'hypothèse que l'Énergie d'adhesion est reliée à l'épaisseur de l'interface entre les deux polymères. A cette fin, l'épaisseur de l'interface est mesurée par réflexion neutronique, et l'énergie d'adhésion est mesurée selon une technique classique destructive.

Le document de H. Moriceau et al., intitulé »Interest of a short plasma treatment to achieve Si-SiO2-Si bonded structures », in Electrochemical Society Proceedings, vol. 2003-19, pages 110-117 divulgue la réalisation d'expériences de réflexion en rayons X sur des structures dont l'interface a subi un traitement plasma.

Le document de F.Rieutord et al. » High Energy x-ray reflectivity of buried interfaces created by wagfer bonding», in Physical review B, Vol. 63, p.125408-1 à 125408-5 divulgue la réalisation d'expériences de réflexion en rayons X à l'interface de collage de 2 substrats en silicium. La source de rayonnement provient d'un rayonnement synchrotron et un détecteur permet de détecter un rayonnement réfléchi.

### EXPOSÉ DE L'INVENTION

L'invention se propose de pallier les inconvénients mentionnés et de mesurer l'énergie d'adhésion de façon non destructive.

L'invention a pour objet un procédé selon la revendication 7.

En particulier, l'invention concerne la mesure de l'énergie d'adhésion par l'intermédiaire de la détermination du déficit en densité électronique à l'interface.

Le taux de fermeture est mesuré ici à l'échelle des liaisons atomiques, c'est-à-dire au niveau manométrique : sa détermination ne s'apparente donc pas au recensement de défauts macroscopiques, comme des « bulles », à l'interface. L'invention est notamment adaptée pour mesurer l'adhérence initiée par un collage moléculaire, en particulier sur des substrats microélectroniques.

Sous l'un de ses aspects, l'invention se rapporte à un procédé de mesure de l'énergie d'adhésion entre deux surfaces comprenant la détermination du déficit de densité électronique à l'interface. La détermination du déficit de densité électronique est effectuée par l'intermédiaire de la réflexion de rayons X à faible incidence sur l'interface.

De préférence, l'énergie d'adhésion est dérivée du déficit de densité électronique, ou du taux de fermeture, par l'intermédiaire d'un étalonnage.

L'invention concerne également un dispositif permettant de mettre en oeuvre le procédé selon l'invention.

L'invention a donc également pour objet un dispositif selon la revendication 1.

Notamment, le dispositif selon l'invention comprend des moyens pour mesurer le déficit de densité électronique. Avantageusement, les moyens de mesure comprennent des moyens pour extraire cette information d'un graphe représentant le coefficient de réflexion de rayons X par l'interface selon leur angle d'incidence, de préférence faible.

Le dispositif comprend des moyens de détection des rayons X et de stockage du coefficient de réflexion ainsi détecté en fonction d'un angle d'incidence variable.

Selon un mode préféré de réalisation, le dispositif selon l'invention comprend un profil d'étalonnage de l'énergie d'adhésion en fonction du déficit de densité électronique et des moyens de comparaison du déficit de densité déterminé avec le profil.

### BRÈVE DESCRIPTION DES DESSINS

Les caractéristiques et avantages de l'invention seront mieux compris à la lecture de la description qui va suivre et en référence aux dessins annexés, donnés à titre illustratif et nullement limitatifs.
La figure 1 représente un appareillage pour mettre en oeuvre un procédé de mesure selon un mode de réalisation préféré de l'invention.
La figure 2 illustre schématiquement les étapes du procédé de mesure selon un mode de réalisation de l'invention.

### EXPOSÉ DÉTAILLÉ DE MODES DE RÉALISATION PARTICULIERS

Lors d'études sur les mécanismes d'adhésion, la demanderesse a découvert que l'énergie d'adhésion était reliée à la structure de l'interface, c'est-à-dire à la répartition de la matière. En particulier, le taux de fermeture de l'interface, défini comme le rapport entre la surface d'un composé réellement en contact, et ce à l'échelle nanométrique, avec un substrat et la surface totale de contact, a pu être relié à l'énergie d'adhésion entre le support et le composé, de sorte qu'une mesure par cet intermédiaire soit possible. L'invention découle de ces observations.

De façon générale, une interface adhérente est formée d'une alternance de zones collées et de zones non collées. Notamment dans le cas de couches minces assemblées par collage moléculaire, la distance entre les couches au niveau des zones non collées de l'interface peut être extrêmement faible, typiquement de l'ordre du nanomètre. La mise en évidence de la surface qui n'est pas en contact nécessite alors une technique très sensible.

Afin de mesurer le taux de fermeture, selon une technique non destructive, il a été trouvé que les rayons X étaient particulièrement adaptés, du fait notamment de leur faible longueur d'onde, typiquement de l'ordre de 0,1 nm.

Or, il a déjà été montré que la mesure du coefficient de réflexion de l'interface pour les rayons X selon l'angle d'incidence permet, par un traitement approprié, à savoir la Transformation de Fourier inverse ou une méthode matricielle de l'optique multicouche (décrite par exemple dans l'ouvrage de Born M et Wolf E : Principale of Optics, 6th Edition, 1980, Pergamon Press), de remonter au profil de densité électronique au travers de l'interface, c'est-à-dire au nombre d'électrons par unité de volume mesuré au niveau de l'interface (voir par exemple Bataillou B, Moriceau H, Rieutord F : « Direct inversion of interfacial reflectivity data using the Patterson function » ; J Appl Cryst 2003 ; 36 : 1352-1355).

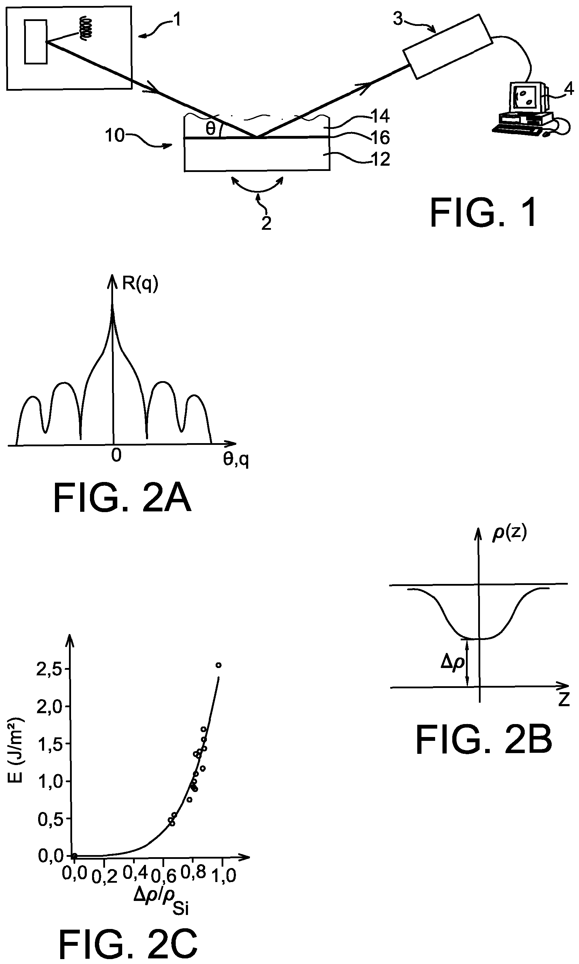

Or si le taux de fermeture est de 100 %, c'est-à-dire s'il n'y a pas de zones sans contact, la densité électronique ρ est identique à celle des matériaux qui sont collés, en particulier à celle ρ_{Si} du silicium pour les plaques SOI de type silicium sur silicium. Parallèlement, si seule une fraction est collée, la densité électronique ρ au niveau de l'interface ne vaut qu'une fraction de la densité électronique ρ_{Si} du silicium massif : de fait, le profil de densité électronique obtenu présente généralement la forme d'un déficit de densité électronique Δρ au niveau de l'interface de collage, déficit d'autant moins marqué que l'adhésion est forte (figure 2B).

Le taux de fermeture peut donc être déduit du déficit de densité électronique Δρ selon une fonction qui peut être étalonnée en quelques points. Il est possible également d'utiliser des modèles d'adhésion entre surfaces rugueuses pour obtenir la corrélation souhaitée. On peut trouver une description de certains de ces modèles par exemple dans Johnson KL : Contact Mechanics, 1985, Cambridge University Press.

La correspondance entre le déficit de densité électronique et l'énergie d'adhésion peut être déduite également d'une courbe maîtresse, ou profil d'échantillonnage.

Un appareillage permettant de mettre en oeuvre le procédé de mesure selon l'invention comprend ainsi de façon avantageuse une source 1 de rayons X, un goniomètre 2 et un détecteur 3 tels qu'illustrés sur la figure 1. Un dispositif 4 est connecté au détecteur 3, par exemple un microordinateur, afin de stocker les informations détectées. Le dispositif 4 est couplé à des moyens de programmation afin de mettre en oeuvre les calculs ou comparaisons selon l'invention pour obtenir les résultats d'énergie d'adhésion E.

Un composé 10, par exemple une plaquette SOI comprenant une couche Si 12 et une couche mince Si superficielle 14, est positionné sur le goniomètre 2. L'un des avantages du procédé selon l'invention est qu'il est non destructif, et n'impose aucune préparation spéciale pour le composé 10.

L'interface 16 entre le substrat 12 et la couche superficielle 14 est soumise à un rayonnement X émis par la source 1 ; l'intensité réfléchie par l'interface 16 est mesurée par le détecteur 3, et normalisée par le dispositif 4 selon l'intensité du faisceau direct incident mesurée au cours de l'expérience, afin d'obtenir le coefficient de réflexion R de l'interface 16 pour les rayons X. Grâce au goniomètre 2, l'angle d'incidence θ peut varier, et le coefficient de réflexion est mesuré en fonction de l'angle d'incidence θ des rayons émis par la source 1 ; généralement, des angles d'incidence assez faibles, d'une fraction de degré à quelques degrés, sont balayés.

La plupart du temps, le coefficient de réflexion R décroît avec l'angle d'incidence θ, et est souvent représenté en fonction de la composante verticale q du vecteur d'onde transféré (q = 4*π*/λ sin θ, avec λ longueur d'onde du rayonnement utilisé) : voir figure 2A.

A partir de la courbe du coefficient R en fonction de q, il est possible, tel que mentionné plus haut, de remonter au profil de densité électronique ρ(z) autour de l'interface et à la densité électronique Δρ au niveau de l'interface 16 ; figure 2B.

Comme la densité électronique ρ est liée à la fraction collée de l'interface, on passe de la densité électronique Δρ au niveau de l'interface 16 entre deux couches 12, 14 de densités ρ_{Si} à l'énergie d'adhésion E par une fonction simple. Cette fonction peut être calculée à partir de modèles d'adhésion entre surfaces rugueuses ou simplement étalonnée à partir de quelques points où l'énergie est mesurée par la méthode « de la lame ». Ainsi, dans la figure 2C, les points représentés sur la courbe correspondent à des séries de mesures, par la technique de Maszara (collage de lames épaisses) décrite dans la référence mentionnée plus haut, de l'énergie d'adhésion sur des interfaces entre silicium/silicium ou silicium/oxyde.

Les différentes étapes peuvent être effectuées par le même microordinateur 4, ou un dispositif de détection peut comprendre des moyens distincts pour obtenir et stocker chaque résultat intermédiaire.

Le procédé selon l'invention a été validé sur des collages hydrophobes et hydrophiles à différentes températures de recuit et ayant subi des traitements de surface différents destinés à modifier l'énergie d'adhésion. Les résultats ont montré que le procédé donnait des résultats fiables.

Compte tenu du degré d'absorption des couches pour le rayonnement, il est préférable que l'épaisseur de la couche supérieure 14 du composé 10 soit inférieure ou égale au micron avec des sources classiques (par exemple anode en cuivre pour le tube de rayon X) et des matériaux comme le silicium. Cette limite peut être augmentée en utilisant par exemple un rayonnement moins absorbé, comme des rayons X durs ou des matériaux moins absorbants.

## Revendications

1. Dispositif de mesure non destructive de l'énergie d'adhésion (E) entre deux couches (12, 14) comprenant :
- des moyens (3, 4) pour détecter des rayons X et pour stocker le coefficient de réflexion (R) des rayons X détectés, selon l'angle d'incidence (θ) sur l'interface (16) entre les deux couches (12, 14) ;
- des moyens (4) de détermination du déficit de densité électronique (Δρ), au niveau de l'interface, comprenant des moyens pour extraire le profil de la densité électronique (ρ(z)) à l'interface (16) à partir d'un profil de réflexion (R) des rayons X selon l'angle d'incidence (θ) sur cette interface (16) ;
- des moyens de programmation afin de mettre en oeuvre des calculs ou comparaisons pour obtenir l'énergie d'adhésion (E).

2. Dispositif selon la revendication 1, comprenant des moyens (4) pour déterminer le taux de fermeture à partir du déficit de densité électronique (Δρ) au niveau de l'interface, le taux de fermeture étant le rapport entre les surfaces des couches réellement en contact à l'échelle nanométrique et la surface totale de contact de ces couches.

3. Dispositif selon la revendication 2 comprenant un profil d'étalonnage de l'énergie d'adhésion en fonction du taux de fermeture, et des moyens pour comparer le taux de fermeture déterminé avec le profil d'étalonnage.

4. Dispositif selon la revendication 2 ou 3, comprenant des modèles d'adhésion entre surfaces rugueuses pour établir une corrélation entre le taux de fermeture et le déficit de densité électronique (Δρ) au niveau de l'interface.

5. Dispositif selon l'une des revendications 1 à 4 comprenant un profil d'étalonnage de l'énergie d'adhésion en fonction du déficit de densité électronique (Δρ) au niveau de l'interface, et des moyens (4) pour comparer le déficit de densité électronique (Δρ) détecté au niveau de l'interface avec le profil d'étalonnage.

6. Dispositif selon l'une des revendications 1 à 5 comprenant des modèles d'adhésion entre surfaces rugueuses pour calculer une fonction permettant de passer du déficit de densité électronique (Δρ) au niveau de l'interface à l'énergie d'adhésion.

7. Procédé non destructif pour mesurer l'énergie d'adhésion entre deux couches (12,14), comprenant :
- une étape de réflexion de rayons X sur l'interface (16) entre les deux couches (12, 14) ;
- une étape de détermination du déficit de densité électronique au niveau de l'interface (16), à partir d'un profil de densité électronique au niveau de l'interface, à partir d'un profil de réflexion (R) des rayons X, selon l'angle d'incidence (θ) sur cette interface (16) ;
- une étape de mise en oeuvre des calculs ou comparaisons pour obtenir l'énergie d'adhésion (E).

8. Procédé selon la revendication 7, comprenant la comparaison du déficit de densité au niveau de l'interface déterminé avec un profil d'étalonnage.

9. Procédé selon la revendication 7, dans lequel on calcule, à partir de modèles d'adhésion entre surfaces rugueuses, une fonction permettant de passer du déficit de densité électronique (Δρ) au niveau de l'interface à l'énergie d'adhésion.

10. Utilisation du dispositif selon l'une des revendications 1 à 6 ou du procédé selon l'une des revendications 7 à 9 pour mesurer l'énergie d'adhésion entre des couches assemblées par collage moléculaire.

## Patentansprüche

1. Vorrichtung zum zerstörungsfreien Messen der Adhäsionsenergie (E) zwischen zwei Schichten (12, 14), aufweisend:
eine Einrichtung (3, 4) zum Erfassen von Röntgenstrahlen und zum Speichern des Reflexionskoeffizienten (R) der erfassten Röntgenstrahlen, und zwar gemäß dem Einfallswinkel (θ) auf die Grenzfläche (16) zwischen den zwei Schichten (12, 14);
eine Einrichtung (4) zur Bestimmung der Elektronendichteabnahme (Δρ) an der Grenzfläche, aufweisend eine Einrichtung zum Extrahieren des Elektronendichteprofils (p (z)) an der Grenzfläche (16) ausgehend von einem Reflexionsprofil (R) der Röntgenstrahlen gemäß dem Einfallswinkel (θ) auf die Grenzfläche (16);
eine Programmeinrichtung, um Berechnungen oder Vergleiche zur Erlangung der Adhäsionsenergie (E) durchzuführen.

2. Vorrichtung nach Anspruch 1, aufweisend eine Einrichtung (4) zum Bestimmen der Schließrate ausgehend von der Elektronendichteabnahme (Δρ) an der Grenzfläche, wobei die Schließrate der Quotient zwischen den tatsächlich in Kontakt befindlichen Flächen, und zwar bezogen auf den Nanometerbereich, und der Gesamtkontaktfläche dieser Schichten ist.

3. Vorrichtung nach Anspruch 2, aufweisend ein Kalibrierprofil der Adhäsionsenergie in Abhängigkeit von der Schließrate, und eine Einrichtung zum Vergleichen der bestimmten Schließrate mit dem Kalibrierprofil.

4. Vorrichtung nach Anspruch 2 oder 3, aufweisend Modelle einer Adhäsion zwischen rauen Oberflächen zur Herstellung einer Korrelation zwischen der Schließrate und der Elektronendichteabnahme (Δρ) an der Grenzfläche.

5. Vorrichtung nach einem der Ansprüche 1 bis 4, aufweisend ein Kalibrierprofil der Adhäsionsenergie in Abhängigkeit von der Elektronendichteabnahme (Δρ) an der Grenzfläche, und eine Einrichtung (4) zum Vergleichen der an der Grenzfläche erfassten Elektronendichteabnahme (Δρ) mit dem Kalibrierprofil.

6. Vorrichtung nach einem der Ansprüche 1 bis 5, aufweisend Modelle einer Adhäsion zwischen rauen Oberflächen zur Berechnung einer Funktion, die erlaubt, von der Elektronendichteabnahme (Δρ) an der Grenzfläche zur Adhäsionsenergie zu gelangen.

7. Zerstörungsfreies Verfahren zum Messen der Adhäsionsenergie zwischen zwei Schichten (12, 14), umfassend:
einen Schritt, bei dem Röntgenstrahlen an der Grenzfläche (16) zwischen den zwei Schichten (12, 14) reflektiert werden;
einen Schritt, bei dem die Elektronendichteabnahme an der Grenzfläche (16), ausgehend von einem Elektronendichteprofil an der Grenzfläche, und zwar ausgehend von einem Reflexionsprofil (R) von Röntgenstrahlen, gemäß dem Einfallswinkel (θ) auf diese Grenzfläche (16) bestimmt wird;
einen Schritt, bei dem Berechnungen oder Vergleiche zur Erlangung der Adhäsionsenergie (E) durchgeführt werden.

8. Verfahren nach Anspruch 7, umfassend das Vergleichen der bestimmten Elektronendichteabnahme an der Grenzfläche mit einem Kalibrierprofil.

9. Verfahren nach Anspruch 7, bei dem man ausgehend von Modellen einer Adhäsion zwischen rauen Oberflächen eine Funktion berechnet, die erlaubt, von der Elektronendichteabnahme (Δρ) an der Grenzfläche zur Adhäsionsenergie zu gelangen.

10. Verwendung der Vorrichtung nach einem der Ansprüche 1 bis 6 oder des Verfahrens nach einem der Ansprüche 7 bis 9 zum Messen der Adhäsionsenergie zwischen durch molekulares Bonden montierten Schichten.

## Claims

1. Non-destructive measurement device for measuring the bond energy (E) between two layers (12, 14), comprising:
- means (3, 4) to detect X-rays and to store the coefficient of reflection (R) of the detected X-rays, according to the angle of incidence (θ) on the interface (16) between the two layers (12, 14);
- means (4) for determining the electronic density deficit (Δρ) at the interface comprising means for extracting the electronic density profile (ρ(z)) at the interface (16) from a reflection profile (R) of the X-rays according to the angle of incidence (θ) on the interface (16);
- programming means implementing calculations or comparisons to obtain the bond energy (E).

2. Device according to claim 1, comprising means (4) for determining the closure ratio from the electronic density deficit (Δρ) at the interface (16), the closure ratio being defined as the ratio of the surfaces of the layers actually in contact on nanometric scale to the total contact surface of these layers.

3. Device according to claim 2, comprising a calibration profile of bond energy in relation to the closure ratio, and means for comparing the determined closure ratio with the calibration profile.

4. Device according to claim 2 or 3, comprising adhesion models between rough surfaces to obtain a correlation between the closure ratio and the electronic density deficit (Δρ) at the interface.

5. Device according to one of claims 1 to 4, comprising a calibration profile of the bond energy in relation to the electronic density deficit (Δρ) at the interface detected at the closure ratio, and means for comparing the electronic density deficit (Δρ) detected at the interface with the calibration profile.

6. Device according to one of claims 1 to 5, comprising adhesion models between rough surfaces to calculate a function to calculate the bond energy E from the electronic density deficit (Δρ).

7. Non-destructive method for measuring the bond energy between two layers (12, 14), comprising:
- a step of reflection of X-rays on the interface (16) between the two layers (12, 14);
- a step of determination of the electronic density deficit at the interface (16) from an electronic density profile at the interface, from a reflection profile (R) of the X-rays according to the angle of incidence (θ) on the interface (16);
- a step of implementing calculations or comparisons to obtain the bond energy (E).

8. Method according to claim 7, comprising comparing the determined density deficit at the interface with a calibration profile.

9. Method according to claim 7, wherein based on adhesion models between rough surfaces, a function is calculated to calculate the bond energy E at the interface from the electronic density deficit (Δρ).

10. Use of a device according to one of claims 1 to 6 or of a method according to one of claims 7 to 9, to measure the bond energy between layers assembled by molecular adhesion.
